(19) Europäisches Patentamt
European Patent Office
Office européen des brevets

(11) **EP 2 475 963 B1**

## (12) EUROPÄISCHE PATENTSCHRIFT

(45) Veröffentlichungstag und Bekanntmachung des Hinweises auf die Patenterteilung:
**27.04.2016 Patentblatt 2016/17**

(21) Anmeldenummer: **10740162.2**

(22) Anmeldetag: **29.07.2010**

(51) Int Cl.:
*G01C 21/36* (2006.01)    *G10L 15/26* (2006.01)
*H03J 5/00* (2006.01)    *B60R 16/037* (2006.01)

(86) Internationale Anmeldenummer:
**PCT/EP2010/004637**

(87) Internationale Veröffentlichungsnummer:
**WO 2011/029498 (17.03.2011 Gazette 2011/11)**

(54) **NAVIGATIONSSYSTEM UND RADIOEMPFANGSSYSTEM**

NAVIGATION SYSTEM AND RADIO RECEIVING SYSTEM

SYSTÈME DE NAVIGATION ET SYSTÈME DE RÉCEPTION RADIO

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **10.09.2009 DE 102009041007**

(43) Veröffentlichungstag der Anmeldung:
**18.07.2012 Patentblatt 2012/29**

(73) Patentinhaber: **Bayerische Motoren Werke Aktiengesellschaft**
**80809 München (DE)**

(72) Erfinder:
• **KNEBEL, Karsten**
**80335 München (DE)**
• **HASSEL, Liza**
**80805 München (DE)**
• **WOLF, Frank**
**76470 Ötigheim (DE)**

(74) Vertreter: **Mayer-Martin, Christian**
**Bayerische Motoren Werke AG**
**Patentabteilung AJ-5**
**80788 München (DE)**

(56) Entgegenhaltungen:
**EP-A1- 1 341 363    EP-A1- 1 555 608**

**Beschreibung**

Die Erfindung betrifft ein Navigationssystem und ein Radioempfangssystem, insbesondere ein Kraftfahrzeug-Navigationssystem und ein Kraftfahrzeug-Radioempfangssystem.

Kraftfahrzeug-Navigationssysteme und Kraftfahrzeug-Radioempfangssysteme sind seit langem bekannt. Neuere Systeme sind dabei mittels Spracheingabe zu bedienen. Dabei kann beispielsweise ein Eingabe-Maßstabswert bzw. ein Eingabe-Frequenzwert per Sprache eingegeben werden. Siehe z.B. die Schriften EP1555608 und EP1341363.

Die Anzahl der per Sprache eingebbaren Werte für den Eingabe-Maßstab bzw. die Eingabe-Frequenz ist jedoch größer als die Anzahl der vorgegebenen auswählbaren Werte für den Anzeige-Maßstab bzw. die Empfangs-Frequenz. Die auswählbaren Werte sind aber einem Nutzer in der Regel nicht geläufig, so dass häufig Werte eingegeben werden, die nicht auswählbar sind.

Beispielsweise sind bei einem Navigationssystem folgende Anzeige-Maßstabswerte (auch Skalierungsfaktor genannt) auswählbar: 100m, 200m, 500m, 1km, 2km, 5km, 10km, 20km, 50km, 100km, 200km. Per Sprache eingebbar oder vom Spracherkennungssystem erfassbar ist aber beispielsweise jeder Maßstabswert, insbesondere verknüpft mit der Einheit Meter oder Kilometer. Alternativ kann vorgesehen sein, dass per Sprache beispielsweise jeder Maßstabswert, insbesondere verknüpft mit der Einheit Meter oder Kilometer, eingebbar oder vom Spracherkennungssystem erfassbar ist, der zwischen einem oberen und einem unteren Grenzwert liegt, hier beispielsweise zwischen 100m und 200km liegt.

Analoge Situationen ergeben sich beispielsweise bei Radioempfangssystemen, insbesondere Rundfunkempfangssystemen, beispielsweise bei der Skalierung des Mittelwellen Empfangsfrequenzbandes in Europa. Dabei sind beispielsweise folgende Frequenzwerte zwischen 531 kHz und 1611kHz auswählbar:

$$531kHz + (9kHz * n) -> 9khz\ Raster.$$

Aber per Sprache eingebbar oder vom Spracherkennungssystem erfassbar sind beispielsweise alle Frequenzwerte zwischen 531 und 1611. Alternativ kann vorgesehen sein, dass per Sprache beispielsweise jeder Frequenzwert zwischen 500 und 1650 eingebbar oder vom Spracherkennungssystem erfassbar ist.

Es gibt also Situationen, in denen durch den Nutzer ein Wert eingegeben wird, der Nutzer eine entsprechende Reaktion des Navigationssystems bzw. Radioempfangssystems erwartet, aber durch das Navigationssystem dem eingegebenen Wert kein auswählbarer Wert zugeordnet werden kann.

Ein Lösungsansatz besteht darin, den eingegebenen nicht auswählbaren Wert auf einen auswählbaren Wert zu runden. Dies ist aber nicht in allen Situationen zielführend. Nimmt man beispielsweise an, dass aktuell im Navigationssystem ein Maßstab, insbesondere Maßstabswert, von 10km eingestellt ist und der Nutzer um einen größeren Maßstab einzustellen - beispielsweise 12km, beispielsweise per Sprache, eingibt, wird durch ein Runden wieder ein Maßstab von 10km eingestellt. Dies entspricht nicht dem primären Nutzerwunsch, den Maßstab zu vergrößern.

Der Erfindung liegt nun die Aufgabe zugrunde, eine technische Lehre anzugeben, durch die automatisch ein dem Nutzerwunsch entsprechender, insbesondere kraftfahrzeugbezogener, Wert ausgewählt wird, wenn der eingegebene, insbesondere kraftfahrzeugbezogene, Wert ungleich einem auswählbaren, insbesondere kraftfahrzeugbezogenen, Wert ist.

Diese Aufgabe wird durch die Merkmale der unabhängigen Ansprüche gelöst. Vorteilhafte Weiterbildungen der Erfindung sind den abhängigen Ansprüchen zu entnehmen.

Ein erfindungsgemäßes Navigationssystem, insbesondere eines Kraftfahrzeuges, eines Mobiltelefons, eines Laptops oder eines anderen tragbaren Gerätes, umfasst eine Eingabeeinrichtung zur Eingabe eines Eingabe-Maßstabswertes, eine Anzeigeeinrichtung zur Darstellung von Straßenkarteninformationen gemäß einem gewählten Anzeige-Maßstabswert und eine Prozessoreinrichtung, die derart eingerichtet und mit der Eingabeeinrichtung und der Anzeigeeinrichtung gekoppelt ist, dass die Anzahl der eingebbaren Eingabe-Maßstabswerte größer ist als die Anzahl der wählbaren Anzeige-Maßstabswerte, wobei die wählbaren Anzeige-Maßstabswerte insbesondere eine Teilmenge der eingebbaren Eingabe-Maßstabswerte bilden.

Der Anzeige-Maßstabswert ist nun gemäß folgender Schritte bestimmbar:

- Setzen eines neuen Eingabe-Maßstabwertes als neuen Anzeige-Maßstabswert, wenn der neue Eingabe-Maßstabwert gleich einem wählbaren Anzeige-Maßstabswert ist,
- Bestimmen eines zum Eingabe-Maßstabwert nächstliegenden Anzeige-Maßstabswertes, wenn der neue Eingabe-Maßstabwert ungleich einem wählbaren Anzeige-Maßstabswert ist,
- Setzen des bestimmten (nächstliegenden) Anzeige-Maßstabswertes als neuen Anzeige-Maßstabswert, wenn der bestimmte Anzeige-Maßstabswert ungleich dem zuletzt (derzeit, aktuell) gewählten Anzeige-Maßstabswert ist,
- Setzen des zum bestimmten (nächstliegenden) Anzeige-Maßstabswert nächstgrößeren Anzeige-Maßstabswertes als neuen Anzeige-Maßstabswert, wenn der bestimmte Anzeige-Maßstabswert gleich dem zuletzt gewählten Anzeige-Maßstabswert ist und der Eingabe-Maßstabswert größer als der zuletzt gewählte Anzeige-Maßstabswert ist, und

- Setzen des zum bestimmten (nächstliegenden) Anzeige-Maßstabswert nächstkleineren wählbaren Anzeige-Maßstabswertes als neuen Anzeige-Maßstabswert, wenn der bestimmte Anzeige-Maßstabswert gleich dem zuletzt gewählten Anzeige-Maßstabswert ist und der Eingabe-Maßstabswert kleiner als der aktuell gewählte Anzeige-Maßstabswert ist.

Vorzugsweise werden die Straßenkarteninformationen (Straßenkartenausschnitt, Straßenkartendarstellung) dann durch die Anzeigeeinrichtung gemäß dem neuen Anzeige-Maßstabswert dargestellt.

Durch die Erfindung wird erreicht, dass insbesondere auch dann automatisch ein dem Nutzerwunsch entsprechender Anzeige-Maßstabswert ausgewählt wird, wenn der den Nutzerwunsch ausdrückende Eingabe-Maßstabswert ungleich einem auswählbaren Anzeige-Maßstabswert ist.

Bei einem bevorzugten Navigationssystem umfasst die Eingabeeinrichtung ein Mikrofon und eine Spracherkennungseinheit, die zum Erfassen eines gesprochenen Eingabe-Maßstabswertes eingerichtet sind.

Im Rahmen der Erfindung liegt auch ein Radioempfangssystem, insbesondere ein Rundfunkempfangssystem, beispielsweise eines Kraftfahrzeuges, eines Mobiltelefons, eines Laptops oder eines anderen tragbaren Gerätes, mit einer Eingabeeinrichtung zur Eingabe eines Eingabe-Frequenzwertes, mit einer Empfangseinrichtung zum Empfang von Signalen basierend auf einem gewählten Empfangs-Frequenzwert und mit einer Prozessoreinrichtung, die derart eingerichtet und mit der Eingabeeinrichtung und der Anzeigeeinrichtung gekoppelt ist, dass die Anzahl der eingebbaren Eingabe-Frequenzwerte größer ist als die Anzahl der wählbaren Empfangs-Frequenzwerte, und dass der Empfangs-Frequenzwert gemäß folgender Schritte bestimmbar ist:

- Setzen des Eingabe-Frequenzwertes als neuen Empfangs-Frequenzwert, wenn der Eingabe-Frequenzwert gleich einem wählbaren Empfangs-Frequenzwert ist,
- Bestimmen eines zum Eingabe-Frequenzwert nächstliegenden Empfangs-Frequenzwert, wenn der Eingabe-Frequenzwert ungleich einem wählbaren Empfangs-Frequenzwert ist,
- Setzen des bestimmten Empfangs-Frequenzwertes als neuen Empfangs-Frequenzwert, wenn der bestimmte Empfangs-Frequenzwert ungleich dem zuletzt (derzeit, aktuell) gewählten Empfangs-Frequenzwert ist,
- Setzen des zum bestimmten Empfangs-Frequenzwert nächstgrößeren Empfangs-Frequenzwertes als neuen Empfangs-Frequenzwert, wenn der bestimmte Empfangs-Frequenzwert gleich dem zuletzt gewählten Empfangs-Frequenzwert ist und der Eingabe-Frequenzwert größer als der zuletzt gewählte Empfangs-Frequenzwert ist, und

- Setzen des zum bestimmten Empfangs-Frequenzwert nächstkleineren wählbaren Empfangs-Frequenzwertes als neuen Empfangs-Frequenzwert, wenn der bestimmte Empfangs-Frequenzwert gleich dem zuletzt gewählten Empfangs-Frequenzwert ist und der Eingabe-Frequenzwert kleiner als der aktuell gewählte Empfangs-Frequenzwert ist.

Die Vorteile und Weiterbildungen eines erfindungsgemäßen Radioempfangssystems entsprechen den Vorteilen und Weiterbildungen des erfindungsgemäßen Navigationssystems.

Im Folgenden wird die Erfindung anhand von Beispielen unter Bezugnahme auf die folgenden Figuren näher erläutert:

Figur 1    zeigt ein vereinfachtes Prinzipschaltbild eines Kraftfahrzeug-Navigationssystems.

Figur 2    zeigt ein vereinfachtes Flussdiagramm eines durch ein Kraftfahrzeug-Navigationssystem durchführbaren Verfahrens.

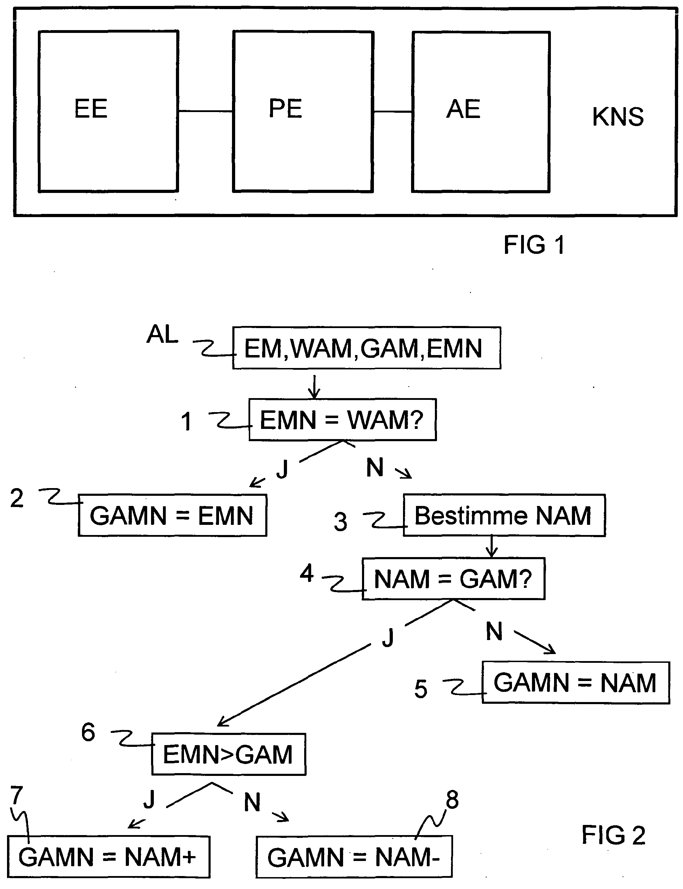

In Figur 1 ist ein Kraftfahrzeug-Navigationssystem KNS dargestellt mit einer Eingabeeinrichtung EE zur Eingabe eines Eingabe-Maßstabswertes EM;EMN (siehe Figur 2). Die Eingabeeinrichtung EE umfasst ein Mikrofon und eine an sich bekannte Spracherkennungseinheit, die zum Erfassen eines gesprochenen Eingabe-Maßstabswertes eingerichtet sind. Die Spracherkennungseinheit kann auch Bestandteil der Prozessoreinrichtung PE sein.

Die Anzeigeeinrichtung AE, wie beispielsweise ein Grafikdisplay, ist zur Darstellung von Straßenkarteninformationen gemäß einem gewählten Anzeige-Maßstabswert GAM;GAMN (siehe Figur 2) ausgebildet.

Die Eingabeeinrichtung EE, eine Prozessoreinrichtung PE, die auch einen Datenspeicher umfassen kann, und die Anzeigeeinrichtung AE sind hard- und softwaretechnisch derart ausgebildet, dass die Anzahl der mittels der Eingabeeinrichtung EE eingebbaren Eingabe-Maßstabswerte EM größer ist als die Anzahl der wählbaren Anzeige-Maßstabswerte WAM, gemäß welcher die Darstellung von Straßenkarteninformationen durch die Anzeigeeinrichtung AE erfolgt.

Die Eingabeeinrichtung EE, die Prozessoreinrichtung PE und die Anzeigeeinrichtung AE sind hard- und softwaretechnisch zudem derart ausgebildet, dass ein neuer Anzeige-Maßstabswert GAMN (siehe Figur 2) basierend auf einem neuen eingegebenen Eingabe-Maßstabswerten EMN (siehe Figur 2) gemäß folgender anhand von Figur 2 dargestellter Schritte bestimmt wird.

Ausgangslage AL:

Es wird von einer Vielzahl eingebbarer Eingabe-Maßstabswerte EM und einer Vielzahl auswählbarer Anzeige-Maßstabswerte WAM ausgegangen, wobei die Anzahl der eingebbaren Eingabe-Maßstabswerte EM

größer ist als die Anzahl der auswählbaren Anzeige-Maßstabswerte WAM. Zudem wird davon ausgegangen, dass aktuell ein Anzeige-Maßstabswerte GAM eingestellt oder ausgewählt ist, und dass ein neuer Eingabe-Maßstabswert EMN eingegeben ist, um einen neuen Anzeige-Maßstabswert GAMN auszuwählen. Es kann außerdem vorgesehen sein, dass die Wertemenge der eingebbaren Eingabe-Maßstabswerte EM begrenzt ist, beispielsweise durch einen oberen und einen unteren Grenzwert.

Schritt 1:

Überprüfen, ob der neue, eingegebene oder erfasste Eingabe-Maßstabswert EMN gleich einem wählbaren Anzeige-Maßstabswert WAM ist.

Schritt 2:

Setzen des Eingabe-Maßstabwert EMN als neuen Anzeige-Maßstabswert GAMN, wenn der Eingabe-Maßstabswert EMN gleich einem wählbaren Anzeige-Maßstabswert WAM ist.

Schritt 3:

Bestimmen eines zum Eingabe-Maßstabswert EMN nächstliegenden Anzeige-Maßstabswertes NAM, wenn der Eingabe-Maßstabwert EMN ungleich einem wählbaren Anzeige-Maßstabswert WAM ist.
Ein zum Eingabe-Maßstabswert EMN nächstliegender Anzeige-Maßstabswert NAM ist beispielsweise der Anzeige-Maßstabswert WAM, der zum Eingabe-Maßstabswert EMN die geringste Distanz hat, welche beispielsweise bestimmt sein kann als der Betrag der Differenz zwischen neuem Eingabe-Maßstabswert EMN und dem entsprechenden Anzeige-Maßstabswert WAM. Auch der Einsatz anderer Distanzfunktionen ist von der Erfindung umfasst.

Schritt 4:

Überprüfen, ob der bestimmte nächstliegende Anzeige-Maßstabswert NAM gleich dem aktuell gewählten Anzeige-Maßstabswert GAM ist.

Schritt 5:

Setzen des bestimmten nächstliegenden Anzeige-Maßstabswertes NAM als neuen Anzeige-Maßstabswert GAMN, wenn der bestimmte Anzeige-Maßstabswert NAM ungleich dem zuletzt gewählten Anzeige-Maßstabswert GAM ist.

Schritt 6:

Prüfen, ob der neue Eingabe-Maßstabswert EMN größer als der zuletzt gewählte Anzeige-Maßstabswert GAM ist.

Schritt 7:

Setzen des zum bestimmten nächstliegenden Anzeige-Maßstabswert NAM nächstgrößeren wählbaren Anzeige-Maßstabswertes NAM+ als neuen Anzeige-Maßstabswert GAMN, wenn der bestimmte Anzeige-Maßstabswert NAM gleich dem zuletzt gewählten Anzeige-Maßstabswert ist und der neue Eingabe-Maßstabswert EMN größer als der zuletzt gewählte Anzeige-Maßstabswert GAM ist. Der zum bestimmten nächstliegenden Anzeige-Maßstabswert NAM nächstgrößere wählbare Anzeige-Maßstabswert NAM+ ist beispielsweise der wählbare Anzeige-Maßstabswert WAM, der zum bestimmten Anzeige-Maßstabswert NAM benachbart ist, und der größer ist als der bestimmte Anzeige-Maßstabswert NAM.

Schritt 8:

Setzen des zum bestimmten nächstliegenden Anzeige-Maßstabswert nächstkleineren wählbaren Anzeige-Maßstabswertes NAM- als neuen Anzeige-Maßstabswert GAMN, wenn der bestimmte Anzeige-Maßstabswert NAM gleich dem zuletzt gewählten Anzeige-Maßstabswert GAM ist und der neue Eingabe-Maßstabswert EMN kleiner als der aktuell gewählte Anzeige-Maßstabswert GAM ist. Der zum bestimmten nächstliegenden Anzeige-Maßstabswert NAM nächstkleinere wählbare Anzeige-Maßstabswert NAMist beispielsweise der wählbare Anzeige-Maßstabswert WAM, der zum bestimmten Anzeige-Maßstabswert NAM benachbart ist, und der größer ist als der bestimmte Anzeige-Maßstabswert NAM.
Es kann vorgesehen sein, dass die Schritte 1 bis 8 nur dann ausgeführt werden, wenn der neue Eingabe-Maßstabswert EMN innerhalb zweier vorgegebener Grenzwerte liegt. Andernfalls kann eine Fehlermeldung ausgegeben, insbesondere angezeigt, werden.
Schließlich erfolgt die Kartendarstellung an der Anzeigeeinrichtung des Navigationssystems gemäß dem neuen Anzeige-Maßstabswert GAMN. Der neue Anzeige-Maßstabswert GAMN wird damit zum gewählten Anzeige-Maßstabswert GAM.
Die soeben exemplarisch anhand eines Kraftfahrzeug-Navigationssystems erläuterte technische Lehre kann analog auf andere Navigationssysteme und auf Radioempfangssysteme übertragen werden.
Durch das folgende konkrete Beispiel soll die Erfindung und ihre Vorteile noch unter wiederholtem Bezug auf Figur 2 weiter verdeutlicht werden.
Es wird von einem Navigationssystem ausgegangen, das gemäß folgender Anzeige-Maßstabswerte WAM betrieben werden kann: 100m, 200m, 500m, 1km, 2km, 5km, 10km, 20km, 50km, 100km, 200km.
Es wird davon ausgegangen, dass aktuell als Anzeige-Maßstabswert GAM 10 km eingestellt ist.

Durch einen Nutzer wird nun per Spracheingabe der neue Eingabe-Maßstabswert EMN (12km) eingegeben.

In Schritt 1 wird festgestellt, dass der neue Eingabe-Maßstabswert EMN (12km) ungleich einem wählbaren Anzeige-Maßstabswerte WAM ist.

In Schritt 3 wird als nächstliegender Anzeige-Maßstabswert NAM (10 km) bestimmt.

In Schritt 4 wird festgestellt, dass der nächstliegende Anzeige-Maßstabswert NAM (10 km) gleich dem aktuell ausgewählten Anzeige-Maßstabswert GAM (10 km) ist.

In Schritt 6 wird festgestellt, dass der neue Eingabe-Maßstabswert EMN (12km) größer als der aktuell ausgewählte Anzeige-Maßstabswert GAM (10 km) ist.

In Schritt 7 wird der zum bestimmten nächstliegenden Anzeige-Maßstabswert NAM (10 km) nächstgrößere Anzeige-Maßstabswert NAM+ (20 km) als neuer Anzeige-Maßstabswert GAMN gewählt.

Auf die Eingabe von 12km als neuen Eingabe-Maßstabswert EMN wird somit durch das System als neuer Anzeige-Maßstabswert GAMN 20 km gewählt. Dieser neue Anzeige-Maßstabswert GAMN entspricht zwar nicht genau dem Nutzerwunsch, entspricht dem Nutzerwunsch aber mit großer Wahrscheinlichkeit mehr als jeder andere auswählbare Anzeige-Maßstabswert WAM, denn der Nutzer wollte vermutlich eine möglichst kleine Vergrößerung des Maßstabs bzw. Skalierungsfaktors.

**Patentansprüche**

1. Navigationssystem (KNS),

 - mit einer Eingabeeinrichtung (EE) zur Eingabe eines Eingabe-Maßstabswertes (EM,EMN),
 - mit einer Anzeigeeinrichtung (AE) zur Darstellung von Straßenkarteninformationen gemäß einem gewählten Anzeige-Maßstabswert (GAM,GAMN) und
 - mit einer Prozessoreinrichtung (PE), die derart eingerichtet und mit der Eingabeeinrichtung (EE) und der Anzeigeeinrichtung (AE) gekoppelt ist,
 - dass die Anzahl der eingebbaren Eingabe-Maßstabswerte (EM) größer ist als die Anzahl der wählbaren Anzeige-Maßstabswerte (WAM), und
 - dass der Anzeige-Maßstabswert (GAMN) gemäß folgender Schritte bestimmbar ist:
 - Setzen des Eingabe-Maßstabwertes (EMN) als Anzeige-Maßstabswert (GAMN), wenn der Eingabe-Maßstabswert (EMN) gleich einem wählbaren Anzeige-Maßstabswert (WAM) ist,
 - Bestimmen eines zum Eingabe-Maßstabswert (EMN) nächstliegenden Anzeige-Maßstabswertes (NAM), wenn der Eingabe-Maßstabwert (EMN) ungleich einem wählbaren Anzeige-Maßstabswert (WAM) ist,
 - Setzen des bestimmten Anzeige-Maßstabswertes (NAM) als Anzeige-Maßstabswert (GAMN), wenn der bestimmte Anzeige-Maßstabswert (NAM) ungleich dem zuletzt gewählten Anzeige-Maßstabswert (GAM) ist,
 - Setzen des zum bestimmten Anzeige-Maßstabswert (NAM) nächstgrößeren Anzeige-Maßstabswertes (NAM+) als Anzeige-Maßstabswert (GAMN), wenn der bestimmte Anzeige-Maßstabswert (NAM) gleich dem zuletzt gewählten Anzeige-Maßstabswert (GAM) ist und der Eingabe-Maßstabswert (EMN) größer als der zuletzt gewählte Anzeige-Maßstabswert (GAM) ist, und
 - Setzen des zum bestimmten Anzeige-Maßstabswert (NAM) nächstkleineren wählbaren Anzeige-Maßstabswertes (NAM-) als Anzeige-Maßstabswert (GAMN), wenn der bestimmte Anzeige-Maßstabswert (NAM) gleich dem zuletzt gewählten Anzeige-Maßstabswert (GAM) ist und der Eingabe-Maßstabswert (EMN) kleiner als der aktuell gewählte Anzeige-Maßstabswert (GAM) ist.

2. Navigationssystem (KNS) nach Anspruch 1, bei dem die Eingabeeinrichtung (EE) ein Mikrofon und eine Spracherkennungseinheit umfasst, die zum Erfassen eines gesprochenen Eingabe-Maßstabswertes (EMN) eingerichtet sind.

3. Radioempfangssystem,

 - mit einer Eingabeeinrichtung zur Eingabe eines Eingabe-Frequenzwertes,
 - mit einer Empfangseinrichtung zum Empfang von Signalen basierend auf einem gewählten Empfangs-Frequenzwert und
 - mit einer Prozessoreinrichtung, die derart eingerichtet und mit der Eingabeeinrichtung und der Anzeigeeinrichtung gekoppelt ist,
 - dass die Anzahl der eingebbaren Eingabe-Frequenzwerte größer ist als die Anzahl der wählbaren Empfangs-Frequenzwerte,
 - dass der Empfangs-Frequenzwert gemäß folgender Schritte bestimmbar ist:
 - Setzen des Eingabe-Frequenzwertes als Empfangs-Frequenzwert, wenn der Eingabe-Frequenzwert gleich einem wählbaren Empfangs-Frequenzwert ist,
 - Bestimmen eines zum Eingabe-Frequenzwert nächstliegenden Empfangs-Frequenzwertes, wenn der Eingabe-Frequenzwert ungleich einem wählbaren Empfangs-Frequenzwert ist,
 - Setzen des bestimmten Empfangs-Frequenzwertes als Empfangs-Frequenzwert, wenn der bestimmte Empfangs-Frequenzwert ungleich dem zuletzt gewählten Empfangs-Frequenzwert ist,
- Setzen des zum bestimmten Empfangs-Frequenzwert nächstgrößeren Empfangs-Frequenzwertes als Empfangs-Frequenzwert, wenn der bestimmte Empfangs-Frequenzwert gleich dem zuletzt gewählten Empfangs-Frequenzwert ist und der Eingabe-Frequenzwert größer als der zuletzt gewählte Empfangs-Frequenzwert ist, und
- Setzen des zum bestimmten Empfangs-Frequenzwert nächstkleineren wählbaren Empfangs-Frequenzwertes als Empfangs-Frequenzwert, wenn der bestimmte Empfangs-Frequenzwert gleich dem zuletzt gewählten Empfangs-Frequenzwert ist und der Eingabe-Frequenzwert kleiner als der aktuell gewählte Empfangs-Frequenzwert ist.

4. Radioempfangssystem nach Anspruch 3,
bei dem die Eingabeeinrichtung ein Mikrofon und eine Spracherkennungseinheit umfasst, die zum Erfassen eines gesprochenen Eingabe-Frequenzwertes eingerichtet sind.

**Claims**

1. A navigation system (KNS), comprising

- an input device (EE) for inputting an input scale value (EM, EMN),
- a display device (AE) for displaying road map information according to a selected display scale value (GA, GAMN) and
- a processor device (PE) which is configured and is coupled to the input device (EE) and to the display device (AE) such that
- the number of input scale values (EM) which can be input is greater than the number of display scale values (WAM) which can be selected, and
- such that the display scale value (GAMN) can be determined according to the following steps:
- setting the input scale value (EMN) as the display scale value (GAMN) when the input scale value (EMN) is equal to a selectable display scale value (WAM),
- determining a display scale value (NAM) closest to the input scale value (EMN) when the input scale value (EMN) is not equal to a selectable display scale value (WAM),
- setting the determined display scale value (NAM) as the display scale value (GAMN) when the determined display scale value (NAM) is not equal to the last selected display scale value (GAM),
- setting the next-greater display scale value (NAM+) to the determined display scale value (NAM) as the display scale value (GAMN) when the determined display scale value (NAM) is equal to the last selected display scale value (GAM) and when the input scale value (EMN) is greater than the last selected display scale value (GAM), and
- setting the next-smaller selectable display scale value (NAM-) to the determined display scale value (NAM) as the display scale value (GAMN) when the determined display scale value (NAM) is equal to the last selected display scale value (GAM) and when the input scale value (EMN) is smaller than the currently selected display scale value (GAM).

2. A navigation system (KNS) according to claim 1, wherein the input device (EE) comprises a microphone and a voice recognition unit which are configured to detect a spoken input scale value (EMN).

3. A radio receiving system, comprising

- an input device for inputting an input frequency value,
- a receiving device for receiving signals based on a selected receiving frequency value, and
- a processor device which is configured and is coupled to the input device and to the display device such that
- the number of input frequency values which can be input is greater than the number of receiving frequency values which can be selected,
- and such that the receiving frequency value can be determined according to the following steps:
- setting the input frequency value as the receiving frequency value when the input frequency value is equal to a selectable receiving frequency value,
- determining a receiving frequency value closest to the input frequency value when the input frequency value is not equal to a selectable receiving frequency value,
- setting the determined receiving frequency value as the receiving frequency value when the determined receiving frequency value is not equal to the last selected receiving frequency value,
- setting the next-greater receiving frequency value to the determined receiving frequency value as the receiving frequency value when the determined receiving frequency value is equal to the last selected receiving frequency value and when the input frequency value is greater than the last selected receiving frequency value, and
- setting the next-smaller selectable receiving frequency value to the determined receiving frequency value as the receiving frequency value when the determined receiving frequency value is equal to the last selected receiving frequency value and when the input frequency value is smaller than the currently selected receiving frequency value.

4. A radio receiving system according to claim 3, wherein the input device comprises a microphone and a voice recognition unit which are configured to detect a spoken input frequency value.

**Revendications**

1. Système de navigation (KNS) comprenant :

- un dispositif d'entrée (EE) permettant d'entrer une valeur de la grandeur de référence d'entrée (EM, EMN),
- un dispositif d'affichage (AE) pour représenter des informations cartographiques de chaussée conformément à une valeur de la grandeur de référence d'affichage sélectionnée (GAM, GAMN), et
- un dispositif de processeur (PE), réalisé et couplé au dispositif d'entrée (EE) et au dispositif d'affichage (AE) de sorte que :
- le nombre des valeurs de la grandeur de référence d'entrée (EM) pouvant être entrées soit supérieur au nombre de valeurs de la grandeur de référence d'affichage (WAM) pouvant être sélectionnées, et
- que la valeur de la grandeur de référence d'affichage (GAMN) puisse être déterminée par la mise en oeuvre des étapes suivantes consistant à :
- prendre la valeur de la grandeur de référence d'entrée (EMN) en tant que valeur de la grandeur de référence d'affichage (GAMN) lorsque la valeur de la grandeur de référence d'entrée (EMN) est égale à une valeur de la grandeur de référence d'affichage (WAM) pouvant être sélectionnée,
- déterminer la valeur de la grandeur de référence d'affichage (NAM) la plus proche de la valeur de la grandeur de référence d'entrée (EMN) lorsque la valeur de la grandeur de référence d'entrée (EMN) n'est pas égale à une valeur de la grandeur de référence d'affichage pouvant être sélectionnée,
- prendre la valeur de la grandeur de référence d'affichage déterminée (NAM), en tant que valeur de la grandeur de référence d'affichage (GAMN) lorsque la valeur de la grandeur de référence d'affichage déterminée (NAM) n'est pas égale à la valeur de la grandeur de référence d'affichage (GAM) choisie en dernier,
- prendre la valeur de la grandeur de référence d'affichage (NAM+) directement supérieure à la valeur de la grandeur de référence d'affichage déterminée (NAM) en tant que valeur de la grandeur de référence d'affichage (GAMN) lorsque la valeur de la grandeur de référence d'affichage déterminée (NAM) est égale à la valeur de la grandeur de référence d'affichage (GAM) choisie en dernier et que la valeur de la grandeur de référence d'entrée (EMN) est supérieure à la valeur de la grandeur de référence d'affichage (GAM) choisie en dernier, et
- prendre la valeur de la grandeur de référence d'affichage (NAM-) pouvant être choisie directement inférieure à la valeur de la grandeur de référence d'affichage (NAM) déterminée en tant que valeur de la grandeur de référence d'affichage (GAMN) lorsque la valeur de la grandeur de référence d'affichage déterminée (NAM) est égale à la valeur de la grandeur de référence d'affichage (GAM) choisie en dernier, et que la valeur de la grandeur de référence d'entrée (EMN) est inférieure à la valeur de la grandeur de référence d'affichage (GAM) actuellement choisie.

2. Système de navigation (KNS) conforme à la revendication 1,
dans lequel le dispositif d'entrée (EE) comprend un microphone et une unité de reconnaissance de parole permettant de déterminer une valeur de la grandeur de référence d'entrée (EMN) vocale.

3. Système de réception radio comprenant :

- un dispositif d'entrée pour permettre d'entrer une valeur de fréquence d'entrée,
- un dispositif de réception pour permettre de recevoir des signaux basés sur une valeur de fréquence de réception choisie, et
- une unité de processeur réalisée et couplée au dispositif d'entrée et au dispositif d'affichage de sorte
- que le nombre de valeurs de la fréquence d'entrée pouvant être entré soit supérieur au nombre de valeurs de la fréquence de réception pouvant être choisies,
- que la valeur de la fréquence de réception puisse être déterminée par la mise en oeuvre des étapes suivantes consistant à :
- prendre la valeur de la fréquence d'entrée en tant que valeur de la fréquence de réception lorsque la valeur de la fréquence d'entrée est égale à une valeur de la fréquence de réception pouvant être choisie,
- déterminer la valeur de la fréquence de réception la plus proche de la valeur de la fréquence d'entrée lorsque la valeur de la fréquence d'entrée n'est pas égale à une valeur de la fréquence de réception pouvant être choisie,

- prendre la valeur de la fréquence de réception déterminée en tant que valeur de la fréquence de réception lorsque la valeur de la fréquence de réception déterminée n'est pas égale à la valeur de la fréquence de réception choisie en dernier,

- prendre la valeur de la fréquence de réception directement supérieure à la valeur de la fréquence de réception déterminée en tant que valeur de la fréquence de réception lorsque la valeur de la fréquence de réception déterminée est égale à la valeur de la fréquence de réception choisie en dernier et que la valeur de la fréquence d'entrée est supérieure à la valeur de fréquence de réception choisie en dernier, et

- prendre la valeur de la fréquence de réception pouvant être choisie directement inférieure à la valeur de la fréquence de réception déterminée en tant que valeur de la fréquence de réception lorsque la valeur de la fréquence de réception déterminée est égale à la valeur de la fréquence de réception choisie en dernier et que la valeur de la fréquence d'entrée est inférieure à la valeur de la fréquence de réception actuellement choisie.

4. Système de réception radio conforme à la revendication 3,
dans lequel le dispositif d'entrée comprend un microphone et une unité de reconnaissance de parole qui est susceptible de détecter une valeur de fréquence d'entrée vocale.

FIG 1

FIG 2

**IN DER BESCHREIBUNG AUFGEFÜHRTE DOKUMENTE**

**In der Beschreibung aufgeführte Patentdokumente**

- EP 1555608 A
- EP 1341363 A